# EUROPÄISCHE PATENTANMELDUNG

(11) **EP 4 753 207 A1**
(43) Veröffentlichungstag der Anmeldung: **03.06.2026**
(21) Anmeldenummer: 24215808.7
(22) Anmeldetag: 27.11.2024
(51) Int. Cl.: H04L 9/40, H04L 67/02

(54) **VERFAHREN ZUM FILTERN VON WEBSEITENABRUFEN**

(71) Anmelder: Deutsche Telekom AG, 53113 Bonn (DE)
(72) Erfinder: MINOW, Jascha, 64625 Bensheim (DE); EL MALLOUKI, Said, 56329 St.Goar (DE); JAHN, Carl, 65191 Wiesbaden (DE)
(74) Vertreter: RDL Patentanwälte PartG mbB

(57) **Zusammenfassung**

Verfahren zum Filtern von Webseitenabrufen, bei dem ein mit einem Kommunikationsnetz verbundenes Endgerät eine Webseite von einem gewünschten URL eines Internets abruft und der Abruf zugelassen wird, wenn eine Erlaubnisliste das gewünschte URL umfasst. Ferner betrifft die Erfindung ein Computerprogrammprodukt.

## Beschreibung

Die Erfindung betrifft ein Verfahren zum Filtern von Webseitenabrufen, bei dem ein mit einem Kommunikationsnetz verbundenes Endgerät eine Webseite von einem gewünschten URL eines Internets abruft und der Abruf zugelassen wird, wenn eine Erlaubnisliste das gewünschte URL umfasst. Ferner betrifft die Erfindung ein Computerprogrammprodukt.

Verfahren der eingangs genannten Art gehören in unterschiedlichen Ausgestaltungen zum Stand der Technik und dienen dazu, das Endgerät vor einem Abrufen ungeeigneter oder schädlicher Webseiten zu schützen. Sie kommen in erster Linie dann zum Einsatz, wenn ein Kind das Endgerät verwendet, um im Worldwide Web, WWW, zu surfen. In diesem Fall wollen gewöhnlich Elternteile des Kinds einen Umfang des Schutzes, d.h. einen erlaubten Bereich des WWW, bestimmen, wobei das Kind in das Bestimmen des Schutzes möglichst einbezogen wird.

Die Erlaubnisliste kann auch als eine Positivliste oder Whitelist bezeichnet werden und umfasst Uniform Resource Locators, URLs, aller erlaubten Webseiten. Die Erlaubnisliste verbietet jedes URL, das die Erlaubnisliste nicht umfasst. Allerdings ist es wegen eines sehr hohen Aufwands praktisch kaum möglich, die Erlaubnisliste manuell zu pflegen.

Eine Verbotsliste kann als eine Negativliste oder Blacklist bezeichnet werden und umfasst URLs aller verbotenen Webseiten. Die Verbotsliste erlaubt jedes URL, das die Verbotsliste nicht umfasst. Ein manuelles Pflegen einer Blacklist ist wegen eines noch höheren Aufwands sogar praktisch ausgeschlossen.

Aufgrunddessen können manuell gepflegte Erlaubnislisten und/oder Verbotslisten keinen genügenden Kinderschutz für ein von einem Kind verwendetes Endgerät bereitstellen, was Elternteilen des Kinds angesichts zunehmender Gefahren des Internets zurecht Sorge bereitet.

Es ist daher eine Aufgabe der Erfindung, ein Verfahren zum Filtern von Webseitenabrufen vorzuschlagen, das einen effektiven Kinderschutz für ein von einem Kind verwendetes Endgerät auf eine effiziente Weise ermöglicht. Eine weitere Aufgabe der Erfindung ist, ein Computerprogrammprodukt zum Filtern von Webseitenabrufen bereitzustellen.

Ein Gegenstand der Erfindung ist ein Verfahren zum Filtern von Webseitenabrufen, bei dem ein mit einem Kommunikationsnetz verbundenes erstes Endgerät eine Webseite von einem gewünschten URL eines Internets abruft und der Abruf zugelassen wird, wenn eine Erlaubnisliste das gewünschte URL umfasst. Unter einem Endgerät im Sinne der Erfindung wird jedes Gerät verstanden, welches einen Hypertext Transfer Protocol, HTTP,-Client umfasst und ausführen kann. Beispielsweise gehören zu den Endgeräten ein Smartphone, ein Table, ein Notebook und ein Desktop-Rechner, die jeweils einen sogenannten Webbrowser umfassen und ausführen können. Zu Kommunikationsnetzen im Sinne der Erfindung gehören kabellose Kommunikationsnetze wie Mobilfunknetze oder Wide Area Local Networks, WLANs, ebenso wie kabelgebundene Kommunikationsnetze. Jedes Netz, das ein Endgerät mit dem Internet verbindet, ist als ein Kommunikationsnetz im Sinne der Erfindung zu verstehen.

Das Verfahren verwendet zwar eine Erlaubnisliste, d.h. eine Positivliste oder Whitelist. Jedoch beruht das Verfahren nicht ausschließlich auf der Erlaubnisliste und erleichtert darüber hinaus das Pflegen der Erlaubnisliste wesentlich.

Erfindungsgemäß speichert ein Knoten des Kommunikationsnetzes ein dem ersten Endgerät zugeordnetes Konto mit der Erlaubnisliste, erkennt der Knoten den Abruf des ersten Endgeräts und lässt der Knoten den erkannten Abruf zu. Weiterhin erfindungsgemäß ermittelt der Knoten einen prozentualen Sicherheitswert des gewünschten URLs, wenn die Erlaubnisliste das gewünschte URL nicht umfasst, lässt der Knoten den erkannten Abruf zu und fügt das gewünschte URL zu der Erlaubnisliste hinzu, wenn der ermittelte prozentuale Sicherheitswert gleich einem oder größer als ein Schwellwert ist, und blockiert der Knoten den erkannten Abruf, wenn die Erlaubnisliste das gewünschte URL nicht umfasst und der ermittelte prozentuale Sicherheitswert geringer ist als der Schwellwert. Der Schwellwert kann beispielsweise in einem Bereich von 0% bis 100% liegen und bevorzugt 90% betragen. Ein Wert von 0% korrespondiert zu maximaler Unsicherheit. Ein Wert von 100% korrespondiert zu maximaler Sicherheit.

Die Erlaubnisliste gehört zu einem Konto, das dem ersten Endgerät zugeordnet ist und von dem Knoten des Kommunikationsnetzes gespeichert wird. Mit anderen Worten speichert das erste Endgerät die Erlaubnisliste nicht lokal. Auf diese Weise ist ein Pflegen der Erlaubnisliste jederzeit ohne ein Zugreifen auf das erste Endgerät möglich. Zudem können einfach weitere Endgeräte in das Pflegen der Erlaubnisliste einbezogen werden.

Zudem filtert der Knoten die Abrufe des ersten Endgeräts. Auf diese Weise wird das erste Endgerät einerseits von einem Filtern der Abrufe entlastet. Andererseits kann das erste Endgerät das Filtern der Abrufe nicht auf einfache Weise umgehen. Infolgedessen ist eine Filterwirkung praktisch sichergestellt.

Durch das schwellwertabhängige automatische Zulassen von Aufrufen und das automatische Hinzufügen von URLs sicherer Webseiten wird die Erlaubnisliste ohne einen manuellen Pflegeaufwand verlängert, wodurch eine Effizienz des Verfahrens wesentlich gesteigert ist.

Bevorzugt ermittelt ein künstliches neuronales Netz des Knotens den prozentualen Sicherheitswert. Das künstliche neuronale Netz kann einen initialen Trainingszustand aufweisen. In dem initialen Trainingszustand kann das künstliche neuronale Netz bestimmte Webseiten bereits erkennen, beispielsweise Webseiten mit expliziten pornografischen Inhalten oder Webseiten mit kostenpflichtigen Kaufangeboten. Derartigen Webseiten weisen einen Sicherheitswert unterhalb des Schwellwerts auf und werden infolgedessen initial blockiert.

Idealerweise wird der prozentuale Sicherheitswert abhängig von einer Ähnlichkeit der von der gewünschten URL abrufbaren Webseite mit Webseiten, die jeweils von einer URL der Erlaubnisliste abrufbar sind, und abhängig von expliziten Merkmalen der von der gewünschten URL abrufbaren Webseite ermittelt. Das künstliche neuronale Netz ist ausgebildet, Webseiten zu klassifizieren. Im Kontext der Erfindung sind Klassen wie "Lernen" und "Unterhaltung" besonders relevant. Zu der Klasse "Lernen" können Webseiten einer Schule des Kinds oder ein Online-Lexikon, zu der Klasse "Unterhaltung" können Webseiten wie eine Streaming-Plattform oder eine Social-Media-Plattform gehören. Selbstverständlich kann eine Klassenstruktur differenzierter sein und eine Klassenhierarchie aufweisen.

Es versteht sich, dass das künstliche neuronale Netz insbesondere von URLs der Erlaubnisliste abrufbare Webseiten möglichst präzise klassifiziert und ähnlichen Webseiten einen entsprechend hohen Sicherheitswert zuordnet. Selbstverständlich erkennt das künstliche neuronale Netz auch explizite Merkmale von Webseiten, denen ein niedriger Sicherheitswert zuzuordnen ist. Wie üblich lernt das künstliche neuronale Netz während des erfindungsgemäßen Verfahrens stetig dazu und passt ermittelte Sicherheitswerte an einen jeweiligen Umfang und Inhalt der Erlaubnisliste an.

Vorteilhaft fügt der Knoten ein URL zu der Erlaubnisliste hinzu, wenn das erste Endgerät während eines vorbestimmten Trainingszeitintervalls eine Webseite von dem URL abruft und die abgerufene Webseite für ein vorbestimmtes Anzeigezeitintervall anzeigt. Das Trainingszeitintervall definiert eine Trainingsphase, die günstigerweise zu Beginn einer Ausführung des erfindungsgemäßen Verfahrens stattfindet. Das Trainingszeitintervall weist beispielsweise und nicht einschränkend eine Länge von zwei Stunden auf. Das Anzeigezeitintervall weist beispielsweise und nicht einschränkend eine Länge von zwanzig Sekunden auf.

In der Trainingsphase können das Kind und ein Elternteil das erste Endgerät gemeinsam betätigen, um die Erlaubsnisliste zu initialisieren. Während der Trainingsphase können beispielsweise Webseiten einer Schule des Kinds, einer Streaming-Plattform, eines Online-Lexikons, einer Social-Media-Plattform abgerufen werden.

Bevorzugt fügt der Knoten ein URL zu der Erlaubnisliste hinzu oder entfernt der Knoten ein URL von der Erlaubnisliste, wenn ein dem Konto zugeordnetes und mit dem Kommunikationsnetz verbundenes zweites Endgerät von dem URL innerhalb eines vorbestimmten Zeitintervalls eine Webseite dreimal hintereinander abruft. Das URL wird hinzugefügt, wenn es noch nicht zu der Erlaubnisliste gehört, und entfernt, wenn es bereits zu der Erlaubnisliste gehört. Auf diese Weise wird automatisch die jeweils zutreffende Wirkung derselben Betätigungshandlung bestimmt. Die Betätigungshandlung, nämlich das dreimalige Abrufen derselben URL binnen kurzer Zeit, ist besonders einfach ausführbar. Beispielsweise kann das vorbestimmte Zeitintervall eine Länge von drei Sekunden oder fünf Sekunden aufweisen. Das zweite Endgerät wird von einem Elternteil des Kinds verwendet. Das Elternteil kann mittels des zweiten Endgeräts die Erlaubnisliste jederzeit effizient pflegen. Ferner kann das Elternteil mittels des zweiten Endgeräts insbesondere die Trainingsphase freigeben, d.h. das zweite Endgerät initiiert das Trainingszeitintervall des ersten Endgeräts. Auf diese Weise stellt das Elternteil sicher, dass das Kind die Erlaubnisliste nicht eigenständig und unbeaufsichtigt initialisiert.

In einer Ausführungsform überträgt der Knoten eine Informationsseite zu dem ersten Endgerät, wenn der Knoten das gewünschte URL blockiert, und veranlasst das erste Endgerät mittels der übertragenen Informationsseite den Knoten, eine Anfrageseite mit dem gewünschten URL zu dem zweiten Endgerät zu übertragen. Die Informationsseite wird von dem ersten Endgerät anstelle der gewünschten Webseite angezeigt und kann ein Bedienelement, beispielsweise ein Hyperlink, umfassen. Durch ein Betätigen des Bedienelements, beispielsweise ein Klicken auf das Hyperlink, wird der Knoten zum Übertragen der Anfrageseite veranlasst.

Die Anfrageseite wird von dem zweiten Endgerät angezeigt und kann ein Bedienelement zum Abrufen einer Webseite von der gewünschten URL umfassen, beispielsweise ein Hyperlink. Durch ein Betätigen des Bedienelements, beispielsweise ein Klicken auf das Hyperlink, wird die Webseite abgerufen und kann geprüft werden. Wenn die Prüfung ergibt, dass das URL zu der Erlaubnisliste hinzugefügt werden soll, kann die Webseite von dem URL ohne Weiteres dreimal kurz hintereinander abgerufen werden. Auf diese Weise wird ein Genehmigen einer von dem Kind gewünschten Webseite für den Elternteil wesentlich erleichtert, was mit einer großen Effizienz des Kinderschutzes einhergeht.

Der Knoten kann das erste Endgerät als ein kontrolliertes Endgerät und das zweite Endgerät als ein kontrollierendes Endgerät zu dem Konto hinzufügen. Das Konto unterscheidet zwei Rollen von Endgeräten, wobei dem selbstverständlich eine Mehrzahl von zweiten Endgeräten hinzugefügt werden kann, beispielsweise jeweils ein Endgerät jedes Elternteils des Kinds. Auf diese Weise wird die Pflege der Erlaubnisliste für jedes Elternteil weiter erleichtert. Unmittelbar nach dem Registrieren ist die Erlaubnisliste leer, d.h. die Erlaubnisliste umfasst kein URL. Das Registrieren kann beispielhaft und nicht einschränkend auf einer Media Access Control, MAC,-Adresse und/oder auf einer LinelD oder IMSI des jeweiligen Endgeräts beruhen.

Vorteilhaft ermittelt der Knoten regelmäßig und asynchron einen prozentualen Sicherheitswert jeder von einem URL der Erlaubnisliste abrufbaren Webseite und entfernt der Knoten ein URL von der Erlaubnisliste, wenn der ermittelte prozentuale Sicherheitswert kleiner als der Schwellwert ist. Auf diese Weise wird eine Schutzwirkung der Erlaubnisliste automatisch auch dann sichergestellt, wenn eine zunächst erlaubte URL später, beispielsweise nach einem Relaunch, nicht mehr erlaubt sein soll. Die Erlaubnisliste braucht von Elternteilen des Kinds nicht manuell geprüft werden, was mit einer hohen Effizienz des Kinderschutzes einhergeht.

Bevorzugt führen das erste Endgerät und das zweite Endgerät jeweils ein Frontend eines verteilten Filterdienstes und führt der Knoten ein Backend des verteilten Filterdienstes aus. Der verteilte Filterdienst umfasst ein erstes Frontend, das auf dem ersten Endgerät installiert wird, ein zweites Frontend, das auf dem zweiten Endgerät installiert wird und ein Backend, das auf dem Knoten des Kommunikationsnetzes installiert wird.

Ein weiterer Gegenstand der Erfindung ist ein Computerprogrammprodukt zum Filtern von Webseitenabrufen, umfassend ein digitales Speichermedium mit einem Programmcode. Das digitale Speichermedium ist beispielhaft und nicht einschränkend als eine CD (Compact Disk), eine DVD (Digital Versatile Disk), ein USB (Universal Serial Bus)-Stick, eine Festplatte (Harddisk, HD), ein Speicherchip (Random Access Memory, RAM), eine Internet-Cloud oder dergleichen ausgebildet.

Erfindungsgemäß veranlasst der Programmcode eine Rechenvorrichtung, als das erste Endgerät, als das zweite Endgerät oder als der Knoten des Kommunikationsnetzes jeweils ein Verfahren nach einer Ausführungsform der Erfindung auszuführen, wenn der Programmcode von einem Prozessor der Rechenvorrichtung ausgeführt wird. Der Programmcode kann jeweils separate Abschnitte für das erste Endgerät, das zweite Endgerät und den Knoten des Kommunikationsnetzes umfassen. Die jeweiligen Abschnitte können in demselben digitalen Speichermedium oder in verschiedenen digitalen Speichermedien gespeichert sein. Der Programmcode befähigt die jeweilige Rechenvorrichtung dazu, im Zusammenwirken mit den jeweils verbleibenden Rechenvorrichtungen das erste Endgerät effizient und effektiv zu schützen.

Ein wesentlicher Vorteil des erfindungsgemäßen Verfahrens besteht darin, dass es einen effektiven Kinderschutz für ein von einem Kind verwendetes Endgerät auf eine effiziente Weise bereitstellt.

Es versteht sich, dass die vorstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung zu verlassen.

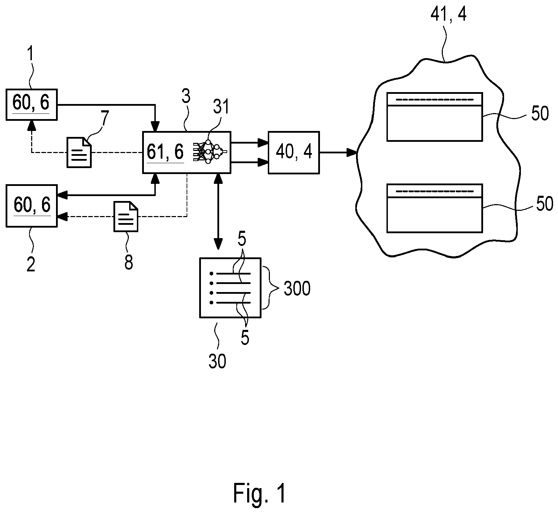

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem Blockdiagramm ein System nach einer Ausführungsform der Erfindung mit einem ersten Endgerät, einem zweiten Endgerät und einem Knoten eines Kommunikationsnetzes.

Fig. 1 zeigt in einem Blockdiagramm ein System nach einer Ausführungsform der Erfindung mit einem ersten Endgerät 1, einem zweiten Endgerät 2 und einem Knoten 3 eines (nicht dargestellten) Kommunikationsnetzes. Das System verwendet einen Domain-Name-Server, DNS, 40 eines Internets 4, um auf Uniform Resource Locators, URLs, 5 eines Worldwide Webs, WWW, 41 des Internets 4 zugeordnete Webseiten 50 zuzugreifen.

Das erste Endgerät 1, das zweite Endgerät 2 und der Knoten 3 können jeweils mittels eines Computerprogrammprodukts zum Filtern von Webseitenabrufen implementiert werden, das ein digitales Speichermedium mit einem Programmcode umfasst. Der Programmcode veranlasst eine Rechenvorrichtung, ein Verfahren nach einer Ausführungsform der Erfindung jeweils als das erste Endgerät 1, als das zweite Endgerät 2 oder als der Knoten 3 des Kommunikationsnetzes wie folgt auszuführen, wenn der Programmcode von einem Prozessor der Rechenvorrichtung ausgeführt wird.

Insbesondere können das erste Endgerät 1 und das zweite Engerät 2 jeweils ein Frontend 60 eines verteilten Filterdienstes 6 ausführen und kann der Knoten 3 ein Backend 61 des verteilten Filterdienstes 6 ausführen, um das erfindungsgemäße Verfahren auszuführen.

Der Knoten 3 kann das erste Endgerät 1 als ein kontrolliertes Endgerät, beispielsweise ein von einem Kind verwendetes Endgerät, und das zweite Endgerät 2 als ein kontrollierendes Endgerät, beispielsweise ein von einem Elternteil des Kinds verwendetes Endgerät, zu einem dem ersten Endgerät 1 zugeordneten und von dem Knoten 3 gespeicherten Konto 30 hinzufügen.

Zunächst kann der Knoten 3 ein URL 5 zu einer Erlaubnisliste 300 des Kontos 30 hinzufügen, wenn das erste Endgerät 1 während eines vorbestimmten Trainingszeitintervalls, beispielsweise zwei Stunden, eine Webseite 50 von dem URL 5 abruft und die abgerufene Webseite 50 für ein vorbestimmtes Anzeigezeitintervall, beispielsweise zwanzig Sekunden, anzeigt.

Nach dem vorbestimmten Trainingszeitintervall werden Webseitenabrufe des ersten Endgeräts 1 wie folgt gefiltert.

Das mit dem Kommunikationsnetz verbundene erste Endgerät 1 ruft eine Webseite 50 von einem gewünschten URL 5 des Internets 4, genauer des WWW 41, ab.

Der Knoten 3 des Kommunikationsnetzes erkennt den Abruf des ersten Endgeräts 1 und lässt den erkannten Abruf zu, wenn die von dem Konto 30 umfasste Erlaubnisliste 300 das gewünschte URL 5 umfasst.

Wenn die Erlaubnisliste 300 das gewünschte URL 5 dagegen nicht umfasst, ermittelt der Knoten 3 einen prozentualen Sicherheitswert des gewünschten URLs 5. Bevorzugt ermittelt ein künstliches neuronales Netz 31 des Knotens 3 den prozentualen Sicherheitswert. Der prozentuale Sicherheitswert wird idealerweise abhängig von einer Ähnlichkeit der von der gewünschten URL 5 abrufbaren Webseite 50 mit Webseiten 50, die jeweils von einer URL 5 der Erlaubnisliste 300 abrufbar sind, und abhängig von expliziten Merkmalen der von der gewünschten URL 5 abrufbaren Webseite 50 ermittelt.

Der Knoten 3 lässt den erkannten Abruf zu und fügt das gewünschte URL zu der Erlaubnisliste 300 hinzu, wenn der ermittelte prozentuale Sicherheitswert gleich einem oder größer als ein Schwellwert, beispielsweise 90%, ist.

Der Knoten 3 blockiert den erkannten Abruf, wenn die Erlaubnisliste 300 das gewünschte URL 5 nicht umfasst und der ermittelte prozentuale Sicherheitswert geringer ist als der Schwellwert.

Wenn der Knoten 3 das gewünschte URL 5 blockiert, kann der Knoten 3 eine Informationsseite 7 zu dem ersten Endgerät 1 übertragen und das erste Endgerät 1 kann mittels der übertragenen Informationsseite 7 den Knoten 3 veranlassen, eine Anfrageseite 8 mit dem gewünschten URL 5 zu dem zweiten Endgerät 2 zu übertragen.

Der Knoten 3 kann ein URL 5 zu der Erlaubnisliste 300 hinzufügen oder ein URL 5 von der Erlaubnisliste 300 entfernen, wenn das ebenfalls dem Konto 30 zugeordnete und mit dem Kommunikationsnetz verbundene zweite Endgerät 2 von dem URL 5 innerhalb eines vorbestimmten Zeitintervalls, beispielsweise drei Sekunden oder fünf Sekunden, eine Webseite 50 dreimal hintereinander abruft.

Unabhängig davon kann der Knoten 3 regelmäßig und asynchron einen prozentualen Sicherheitswert jeder von einem URL 5 der Erlaubnisliste 300 abrufbaren Webseite 50 ermitteln und ein URL 5 von der Erlaubnisliste 300 entfernen, wenn der ermittelte prozentuale Sicherheitswert kleiner als der Schwellwert ist.

### Bezugszeichenliste

- 1: erstes Endgerät
- 2: zweites Endgerät
- 3: Knoten
- 30: Konto
- 300: Erlaubnisliste
- 31: künstliches neuronales Netz
- 4: Internet
- 40: Domain-Name-Server, DNS
- 41: Worldwide Web, WWW
- 5: URL
- 50: Webseite
- 6: verteilte Filteranwendung
- 60: Frontend
- 61: Backend
- 7: Informationsseite
- 8: Anfrageseite

## Patentansprüche

1. Verfahren zum Filtern von Webseitenabrufen, bei dem
- ein mit einem Kommunikationsnetz verbundenes erstes Endgerät (1) eine Webseite (50) von einem gewünschten URL (5) eines Internets (4) abruft;
- ein Knoten (3) des Kommunikationsnetzes den Abruf des ersten Endgeräts (1) erkennt und den erkannten Abruf zulässt, wenn eine von einem dem ersten Endgerät (1) zugeordneten und von dem Knoten (3) gespeicherten Konto (30) umfasste Erlaubnisliste (300) das gewünschte URL (5) umfasst;
- der Knoten (3) einen prozentualen Sicherheitswert des gewünschten URLs (5) ermittelt, wenn die Erlaubnisliste (300) das gewünschte URL (5) nicht umfasst, den erkannten Abruf zulässt und das gewünschte URL zu der Erlaubnisliste (300) hinzufügt, wenn der ermittelte prozentuale Sicherheitswert gleich einem oder größer als ein Schwellwert ist.
- der Knoten (3) den erkannten Abruf blockiert, wenn die Erlaubnisliste (300) das gewünschte URL (5) nicht umfasst und der ermittelte prozentuale Sicherheitswert geringer ist der Schwellwert.

2. Verfahren nach Anspruch 1, bei dem ein künstliches neuronales Netz (31) des Knotens (3) den prozentualen Sicherheitswert ermittelt.

3. Verfahren nach Anspruch 1 oder 2, bei dem der prozentuale Sicherheitswert abhängig von einer Ähnlichkeit der von der gewünschten URL (5) abrufbaren Webseite (50) mit Webseiten (50), die jeweils von einer URL (5) der Erlaubnisliste (300) abrufbar sind, und abhängig von expliziten Merkmalen der von der gewünschten URL (5) abrufbaren Webseite (50) ermittelt wird.

4. Verfahren nach einem der Ansprüche 1 bis 3, bei dem der Knoten (3) ein URL (5) zu der Erlaubnisliste (300) hinzufügt, wenn das erste Endgerät (1) während eines vorbestimmten Trainingszeitintervalls eine Webseite (50) von dem URL (5) abruft und die abgerufene Webseite (50) für ein vorbestimmtes Anzeigezeitintervall anzeigt.

5. Verfahren nach einem der Ansprüche 1 bis 4, bei dem der Knoten (3) ein URL (5) zu der Erlaubnisliste (300) hinzufügt oder von der Erlaubnisliste (300) ein URL (5) entfernt, wenn ein dem Konto (30) zugeordnetes und mit dem Kommunikationsnetz verbundenes zweites Endgerät (2) von dem URL (5) innerhalb eines vorbestimmten Zeitintervalls eine Webseite (50) dreimal hintereinander abruft.

6. Verfahren nach einem der Ansprüche 1 bis 5, bei dem der Knoten (3) eine Informationsseite (7) zu dem ersten Endgerät (1) überträgt, wenn der Knoten (3) das gewünschte URL (5) blockiert, und das erste Endgerät (1) mittels der übertragenen Informationsseite (7) den Knoten (3) veranlasst, eine Anfrageseite (8) mit dem gewünschten URL (5) zu dem zweiten Endgerät (2) zu übertragen.

7. Verfahren nach einem der Ansprüche 1 bis 6, bei dem der Knoten (3) das erste Endgerät (1) als ein kontrolliertes Endgerät und das zweite Endgerät (2) als ein kontrollierendes Endgerät zu dem Konto (30) hinzufügt.

8. Verfahren nach einem der Ansprüche 1 bis 7, bei dem der Knoten (3) regelmäßig und asynchron einen prozentualen Sicherheitswert jeder von einem URL (5) der Erlaubnisliste (300) abrufbaren Webseite (50) ermittelt und ein URL (5) von der Erlaubnisliste (300) entfernt, wenn der ermittelte prozentuale Sicherheitswert kleiner als der Schwellwert ist.

9. Verfahren nach einem der Ansprüche 1 bis 8, bei dem das erste Endgerät (1) und das zweite Endgerät (2) jeweils ein Frontend (60) eines verteilten Filterdienstes (6) ausführen und der Knoten (3) ein Backend (61) des verteilten Filterdienstes (6) ausführt.

10. Computerprogrammprodukt zum Filtern von Webseitenabrufen, umfassend ein digitales Speichermedium mit einem Programmcode, der eine Rechenvorrichtung veranlasst, als das erste Endgerät (1), als das zweite Endgerät (2) oder als der Knoten (3) des Kommunikationsnetzes jeweils ein Verfahren nach einem der Ansprüche 1 bis 9 auszuführen, wenn der Programmcode von einem Prozessor der Rechenvorrichtung ausgeführt wird.
